# EUROPEAN PATENT SPECIFICATION

(11) **EP 4 488 872 B1**
(45) Date of publication and mention of the grant of the patent: **02.12.2026**
(21) Application number: 23925601.9
(22) Date of filing: 31.10.2023
(51) Int. Cl.: G06Q 50/06, G06F 30/20, G21D 1/00, G06F 111/04, G06F 119/04

(54) **PROCESSING METHOD AND APPARATUS FOR NUCLEAR FACILITY DECOMMISSIONING MODEL, AND COMPUTER DEVICE**
VERARBEITUNGSVERFAHREN UND -VORRICHTUNG FÜR EIN KERNANLAGEN-DEKOMMISSIONIERUNGSMODELL UND COMPUTERVORRICHTUNG
PROCÉDÉ ET APPAREIL DE TRAITEMENT POUR MODÈLE DE MISE HORS SERVICE D'INSTALLATION NUCLÉAIRE, ET DISPOSITIF INFORMATIQUE

(30) Priority: 07.04.2023 CN 202310404187
(43) Date of publication of application: 08.01.2025
(73) Proprietor: China Nuclear Power Design Company Ltd. (Shenzhen), Shenzhen, Guangdong 518172 (CN); China Nuclear Power Engineering Co., Ltd., Shenzhen, Guangdong 518124 (CN)
(72) Inventor: ZHANG, Zhennan, Shenzhen Guangdong 518172 (CN); LIU, Fan, Shenzhen Guangdong 518172 (CN); LI, Qiang, Shenzhen Guangdong 518172 (CN); ZHANG, Xueling, Shenzhen Guangdong 518172 (CN); ZHONG, Xiangbin, Shenzhen Guangdong 518172 (CN); LIANG, Weilun, Shenzhen Guangdong 518172 (CN)
(74) Representative: V.O.
(86) International application number: PCT/CN2023/128009
(87) International publication number: WO 2024/207717

(56) References cited:
- EP-A1- 2 887 282
- CN-A- 109 325 282
- CN-A- 110 348 065
- CN-A- 110 348 584
- CN-A- 114 816 068
- CN-A- 116 401 885
- US-A1- 2018 210 979
- US-A1- 2018 210 979
- US-A1- 2022 148 746

## Description

### TECHNICAL FIELD

The present application relates to the field of computer technologies, and in particular to a nuclear facility decommissioning model processing method and apparatus, a computer device, a storage medium, and a computer program product.

### BACKGROUND

Nuclear facility decommissioning is a complex and systematic project, which is not merely the reverse of the construction process and needs to take more special circumstances into account than the construction process. After more than a decade or even decades of operation, a large amount of radioactive materials have been accumulated in closed environments of nuclear facilities. Original closed systems may be breached in a decommissioning process, bringing a lot of uncertainty. The decommissioning process involves decontamination, dismantling, cutting, segmentation, conditioning, and the like of system devices. These open operations may be accompanied by radiation risks and industrial risks. Therefore, the nuclear facility decommissioning requires a thorough decommissioning plan.

In existing manners, in simulation of a dismantling process of a device required to be decommissioned, a simulation system provides a user with fixed process operations, and degrees of freedom of operation of the user and the system are limited, leads to inefficiency of decommissioning of the device.

### SUMMARY

The invention is set out in the appended set of claims.

According to various embodiments of the present application, a nuclear facility decommissioning model processing method and apparatus, a computer device, a computer-readable storage medium, and a computer program product that can improve the efficiency of decommissioning plan acquisition are provided.

A nuclear facility decommissioning model processing method, including:
acquiring three-dimensional models of a processed object and a decommissioning tool;
extracting basic attributes, behavior attributes, and engineering attributes of the processed object and the decommissioning tool from pre-established nuclear facility decommissioning information modeling (DIM); wherein the basic attributes of the processed object include physical attributes of the processed object, the basic attributes of the decommissioning tool include physical attributes of the decommissioning tool, the behavior attributes of the decommissioning tool include action constraints of the decommissioning tool, and the engineering attributes of the decommissioning tool include a preset interactive mode between the processed object and the decommissioning tool;
calculating, according to source term distribution in the physical attributes of the processed object, a three-dimensional radiation field of the processed object and performing meshing, to obtain radiation field dose meshes of the processed object;
performing action simulation on the decommissioning tool according to the action constraints of the decommissioning tool and the radiation field dose meshes of the processed object, to obtain action simulation results of the three-dimensional models of the processed object and the decommissioning tool;
simulating the action simulation results of the three-dimensional models of the processed object and the decommissioning tool based on the preset interactive mode between the processed object and the decommissioning tool, to obtain a target simulation result of the processed object and the decommissioning tool; and
traversing at least two processed objects, the decommissioning tool, and the target simulation result of the processed objects and the decommissioning tool, and generating a simulated decommissioning processing plan for the processed objects.

A nuclear facility decommissioning model processing apparatus, including:
an acquisition module configured to acquire three-dimensional models of a processed object and a decommissioning tool;
an extraction module configured to extract basic attributes, behavior attributes, and engineering attributes of the processed object and the decommissioning tool from pre-established nuclear facility DIM; wherein the basic attributes of the processed object include physical attributes of the processed object, the basic attributes of the decommissioning tool include physical attributes of the decommissioning tool, the behavior attributes of the decommissioning tool include action constraints of the decommissioning tool, and the engineering attributes of the decommissioning tool include a preset interactive mode between the processed object and the decommissioning tool;
a dose processing module configured to calculate, according to source term distribution in the physical attributes of the processed object, a three-dimensional radiation field of the processed object and perform meshing, to obtain radiation field dose meshes of the processed object;
an action simulation module configured to perform action simulation on the decommissioning tool according to the action constraints of the decommissioning tool and the radiation field dose meshes of the processed object, to obtain action simulation results of the three-dimensional models of the processed object and the decommissioning tool;
a simulation module configured to simulate the action simulation results of the three-dimensional models of the processed object and the decommissioning tool based on the preset interactive mode between the processed object and the decommissioning tool, to obtain a target simulation result of the processed object and the decommissioning tool; and
an assessment module configured to traverse at least two processed objects, the decommissioning tool, and the target simulation result of the processed objects and the decommissioning tool, and generate a simulated decommissioning processing plan for the processed objects.

A computer device, including a memory and a processor, the memory storing a computer program, wherein when the processor executes the computer program, the following steps are implemented:
acquiring three-dimensional models of a processed object and a decommissioning tool;
extracting basic attributes, behavior attributes, and engineering attributes of the processed object and the decommissioning tool from pre-established nuclear facility DIM; wherein the basic attributes of the processed object include physical attributes of the processed object, the basic attributes of the decommissioning tool include physical attributes of the decommissioning tool, the behavior attributes of the decommissioning tool include action constraints of the decommissioning tool, and the engineering attributes of the decommissioning tool include a preset interactive mode between the processed object and the decommissioning tool;
calculating, according to source term distribution in the physical attributes of the processed object, a three-dimensional radiation field of the processed object and performing meshing, to obtain radiation field dose meshes of the processed object;
performing action simulation on the decommissioning tool according to the action constraints of the decommissioning tool and the radiation field dose meshes of the processed object, to obtain action simulation results of the three-dimensional models of the processed object and the decommissioning tool;
simulating the action simulation results of the three-dimensional models of the processed object and the decommissioning tool based on the preset interactive mode between the processed object and the decommissioning tool, to obtain a target simulation result of the processed object and the decommissioning tool; and
traversing at least two processed objects, the decommissioning tool, and the target simulation result of the processed objects and the decommissioning tool, and generating a simulated decommissioning processing plan for the processed objects.

A computer-readable storage medium, having a computer program stored therein, wherein when the computer program is executed by a processor, the following steps are implemented:
acquiring three-dimensional models of a processed object and a decommissioning tool;
extracting basic attributes, behavior attributes, and engineering attributes of the processed object and the decommissioning tool from pre-established nuclear facility DIM; wherein the basic attributes of the processed object include physical attributes of the processed object, the basic attributes of the decommissioning tool include physical attributes of the decommissioning tool, the behavior attributes of the decommissioning tool include action constraints of the decommissioning tool, and the engineering attributes of the decommissioning tool include a preset interactive mode between the processed object and the decommissioning tool;
calculating, according to source term distribution in the physical attributes of the processed object, a three-dimensional radiation field of the processed object and performing meshing, to obtain radiation field dose meshes of the processed object;
performing action simulation on the decommissioning tool according to the action constraints of the decommissioning tool and the radiation field dose meshes of the processed object, to obtain action simulation results of the three-dimensional models of the processed object and the decommissioning tool;
simulating the action simulation results of the three-dimensional models of the processed object and the decommissioning tool based on the preset interactive mode between the processed object and the decommissioning tool, to obtain a target simulation result of the processed object and the decommissioning tool; and
traversing at least two processed objects, the decommissioning tool, and the target simulation result of the processed objects and the decommissioning tool, and generating a simulated decommissioning processing plan for the processed objects.

A computer program product, including a computer program, wherein when the computer program is executed by a processor, the following steps are implemented:
acquiring three-dimensional models of a processed object and a decommissioning tool;
extracting basic attributes, behavior attributes, and engineering attributes of the processed object and the decommissioning tool from pre-established nuclear facility DIM; wherein the basic attributes of the processed object include physical attributes of the processed object, the basic attributes of the decommissioning tool include physical attributes of the decommissioning tool, the behavior attributes of the decommissioning tool include action constraints of the decommissioning tool, and the engineering attributes of the decommissioning tool include a preset interactive mode between the processed object and the decommissioning tool;
calculating, according to source term distribution in the physical attributes of the processed object, a three-dimensional radiation field of the processed object and performing meshing, to obtain radiation field dose meshes of the processed object;
performing action simulation on the decommissioning tool according to the action constraints of the decommissioning tool and the radiation field dose meshes of the processed object, to obtain action simulation results of the three-dimensional models of the processed object and the decommissioning tool;
simulating the action simulation results of the three-dimensional models of the processed object and the decommissioning tool based on the preset interactive mode between the processed object and the decommissioning tool, to obtain a target simulation result of the processed object and the decommissioning tool; and
traversing at least two processed objects, the decommissioning tool, and the target simulation result of the processed objects and the decommissioning tool, and generating a simulated decommissioning processing plan for the processed objects.

Details of one or more embodiments of the present application are set forth in the following accompanying drawings and descriptions. Other features, objectives, and advantages of the present application become obvious with reference to the specification, the accompanying drawings, and the claims.

### BRIEF DESCRIPTION OF THE DRAWINGS

In order to more clearly illustrate the technical solutions in embodiments of the present application or the prior art, the accompanying drawings used in the description of the embodiments or the prior art will be briefly introduced below. It is apparent that, the accompanying drawings in the following description are only some embodiments of the present application, and other drawings can be obtained by those of ordinary skill in the art from the provided drawings without creative efforts.
FIG. 1 is a diagram of an application environment of a nuclear facility decommissioning model processing method according to an embodiment;
FIG. 2 is a schematic flowchart of a nuclear facility decommissioning model processing method according to an embodiment;
FIG. 3 is a schematic flowchart of a method for establishing nuclear facility decommissioning information modeling (DIM) according to an embodiment;
FIG. 4 is a schematic diagram of construction of nuclear facility DIM according to an embodiment;
FIG. 5 is a schematic flowchart of a method for updating nuclear facility DIM according to an embodiment;
FIG. 6 is a schematic flowchart of a nuclear facility decommissioning model processing method according to an embodiment;
FIG. 7 is a comparison diagram of a nuclear facility decommissioning simulation system according to an embodiment;
FIG. 8 is a schematic structural diagram of a nuclear facility decommissioning simulation system according to an embodiment;
FIG. 9 is a structural block diagram of a nuclear facility decommissioning model processing apparatus according to an embodiment; and
FIG. 10 is a diagram of an internal structure of a computer device according to an embodiment.

### DETAILED DESCRIPTION

In order to make the objectives, technical solutions, and advantages of the present application more clearly understood, the present application is described in further detail below with reference to the accompanying drawings and embodiments. It should be understood that specific embodiments described herein are intended only to explain the present application and are not intended to limit the present application.

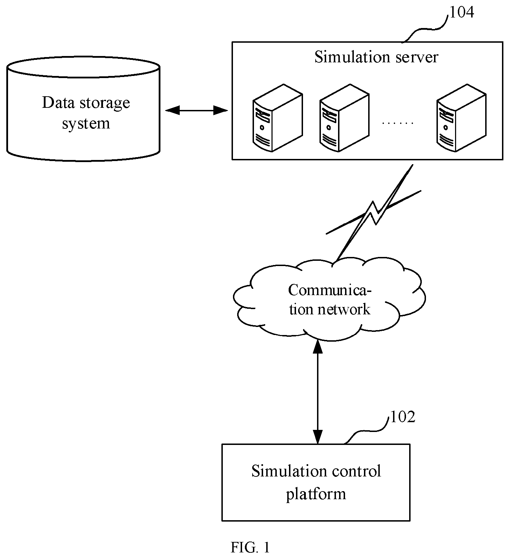

A nuclear facility decommissioning model processing method according to embodiments of the present application may be applied to an application environment as shown in FIG. 1. A simulation control platform 102 communicates with a simulation server 104 via a network. A data storage system may store data required to be processed by the simulation server 104. The data storage system may be integrated on the simulation server 104, or may be placed on a cloud or other network servers.

The simulation server 104 acquires a three-dimensional model of a processed object. The simulation server 104 extracts basic attributes, behavior attributes, and engineering attributes of the processed object from pre-established nuclear facility DIM. The basic attributes of the processed object include source term distribution of the processed object, the behavior attributes of the processed object include action constraints of the processed object, and the engineering attributes of the processed object include a preset interactive mode between the processed object and the decommissioning tool. The simulation server 104 calculates, according to source term distribution of the processed object, a three-dimensional radiation field of the processed object and performs meshing, to obtain radiation field dose meshes of the processed object. The simulation server 104 performs action simulation on the processed object according to the action constraints of the processed object and the radiation field dose meshes of the processed object, to obtain an action simulation result of the three-dimensional model of the processed object. The simulation server 104 simulates the action simulation result of the three-dimensional model of the processed object based on the preset interactive mode between the processed object and the decommissioning tool, to obtain a target simulation result of the processed object and the decommissioning tool. The simulation server 104 traverses at least two processed objects, the decommissioning tool, and the target simulation result of the processed objects and the decommissioning tool, generates a simulated decommissioning processing plan for the processed objects, and pushes the simulated decommissioning processing plan to the simulation control platform 102. The simulation control platform 102 may be, but is not limited to, a smart large screen with a display capability or other visual terminals. The simulation server 104 may be implemented using an independent server or a server cluster including a plurality of servers.

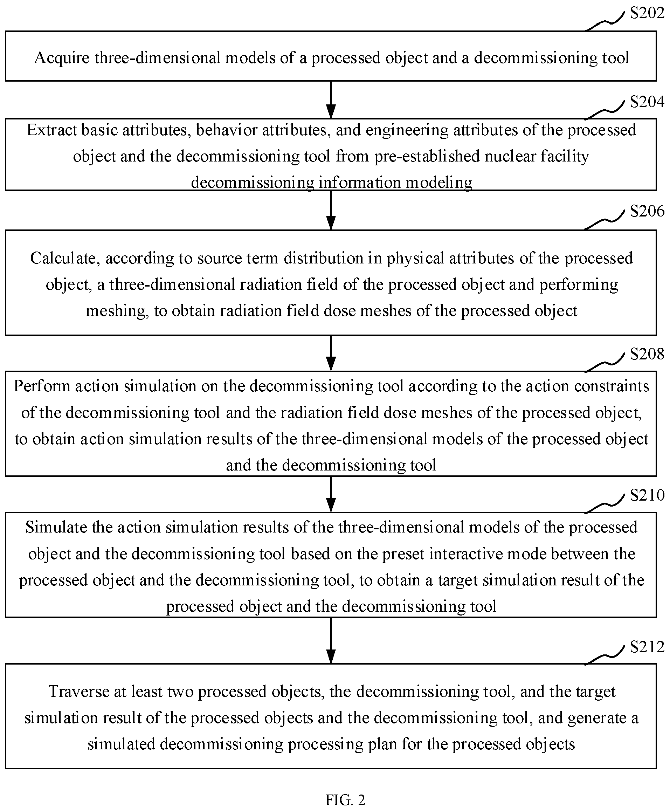

In an embodiment, as shown in FIG. 2, a nuclear facility decommissioning model processing method is provided. For example, the method is applied to the server in FIG. 1, and includes the following steps.

In S202, three-dimensional models of a processed object and a decommissioning tool are acquired.

The processed object may be a general name of types of systems, buildings (structures), and devices (structures, systems and components (SSCs)) required to be decommissioned or planned to be decommissioned in a nuclear power plant. A reason for the decommissioning of the processed object may be that decommissioning is performed after a service life is reached or after an accident occurs or inspection is not up to standard. The processed object includes types of systems, buildings (structures), and devices (SSCs) in decommissioning scenes, such as various device pump valves or other devices in a reactor building.

The decommissioning tool refers to a tool active in a decommissioning scene. Specifically, the decommissioning tool may be configured to decontaminate, cut, and transport the processed object.

It is to be noted that a large nuclear facility such as a reactor building of a nuclear power plant has a height of 40 m and a diameter of 30 m, which may accommodate thousands of device pump valves; and a small nuclear facility such as a microreactor is equivalent to a family swimming pool, a reactor thereof only has a size of a pressure cooker, and operation can be maintained with dozens of devices. The decommissioning scenes in which the processed objects are located are quite different. Therefore, simulated decommissioning simulation is required to be performed on systems, buildings (structures), and devices (SSCs) in different decommissioning scenes. On the one hand, in a traditional method, a developer sets a fixed virtual scene and then allows a user to simulate a decommissioning activity under a system-set rule. On the other hand, in the traditional method, animation of the decommissioning activity shows a fixed process, which requires repeated debugging to simulate different decommissioning plans and can no longer meet simulation requirements of various nuclear facility decommissioning processes.

The three-dimensional models of the processed object and the decommissioning tool may be digital models that reflect a real spatial form of a target. The three-dimensional model may be pre-configured by the user or may be configured and generated based on a certain rule.

Specifically, the acquiring a three-dimensional model of a processed object includes: performing bounding box processing on the three-dimensional model to obtain a three-dimensional model after bounding box processing, which can simplify a decommissioning model of a target device and reduce an amount of calculation of the three-dimensional model of the processed object in simulation interaction. A bounding box is an algorithm for solving an optimal bounding space of a set of discrete points. The basic idea is to use a geometric solid (referred to as a bounding box) with a slightly large volume and simple characteristics to approximately replace a complex geometric object.

In S204, basic attributes, behavior attributes, and engineering attributes of the processed object and the decommissioning tool are extracted from pre-established nuclear facility DIM; wherein the basic attributes of the processed object include physical attributes of the processed object, the basic attributes of the decommissioning tool include physical attributes of the decommissioning tool, the behavior attributes of the decommissioning tool include action constraints of the decommissioning tool, and the engineering attributes of the decommissioning tool include a preset interactive mode between the processed object and the decommissioning tool.

Nuclear facility DIM is an information template that may be embedded in a virtual simulation tool, and takes a three-dimensional model as a core, which regulates the user to import various simulation data information into the virtual simulation tool to achieve a high degree of integration of the three-dimensional model and various simulation information. Specifically, the three-dimensional model and model-related information of the processed object are acquired in advance and are imported into a database according to a standard format, in a subsequent simulation stage, the system directly and automatically reads the corresponding data in the information template, and a driver carries out simulation.

Specifically, the model-related information includes the basic attributes of the processed object, the basic attributes of the decommissioning tool, the behavior attributes of the decommissioning tool, and the engineering attributes of the decommissioning tool.

The basic attributes may also be physical attributes of the processed object, including information such as a weight, geometry, a material, a source term, a unit price, consumable parts, a service life, a drawing, and a decommissioning document of the three-dimensional model of the processed object, and a collision portion is provided for the bounding box of the model. Various parameters of the basic attributes are numerical input for subsequent nuclear facility decommissioning simulation calculation. The decommissioning tool also has basic attributes, including a weight, geometry, a material, a source term, a unit price, consumable parts, a service life, a drawing, and a decommissioning document of the three-dimensional model of the decommissioning tool.

The behavior attributes refer to motion modes of various components in an independent decommissioning tool, including assembly manners (spatial geometric relationships), attitude control (binding motion programs), action constraints (moving strokes and rotation limits), control panels, and the like. After completion of settings of the behavior attributes, each independent model may be exported separately for viewing and control.

The engineering attributes refer to set functions that a decommissioning tool model can perform and mutual interactive modes, including cutting, hoisting, carrying, pickup, assembling, climbing, and the like. The engineering attributes endow a capability of simulating a process among a virtual character, a background environment, an operating tool, and the processed object. The engineering attributes of the decommissioning tool include a preset interactive mode between the processed object and the decommissioning tool. The decommissioning tool may be a specific tool type involved in the interactive mode. For example, a cutting torch is configured to cut a target, a hoist is configured to hoist and transport the processed object, or the like.

In S206, according to source term distribution in the physical attributes of the processed object, a three-dimensional radiation field of the processed object is calculated and meshing is performed, to obtain radiation field dose meshes of the processed object.

In an actual decommissioning scene, due to radioactive residues in a reactor of a nuclear facility, many objects in the nuclear facility become radioactive after being activated or contaminated by radiation. A source term refers to a type and a quantity of radioactive elements. Therefore, the source term distribution of the processed object needs to be acquired. Further, according to the source term distribution of the processed object, the three-dimensional radiation field of the processed object is calculated and meshing is performed, to obtain the radiation field dose meshes of the processed object.

In S208, action simulation is performed on the decommissioning tool according to the action constraints of the decommissioning tool and the radiation field dose meshes of the processed object, to obtain action simulation results of the three-dimensional model of the decommissioning tool.

The action constraints of the decommissioning tool include a movement stroke, a rotation limit, and the like of an independent decommissioning tool, or a movement stroke, a rotation limit, and the like of a component that acts independently in the decommissioning tool. It is to be noted that the action constraints of the decommissioning tool may be action constraints of the decommissioning tool as a whole, or action constraints of respective components in the decommissioning tool.

Radiation intensity of a dose mesh cell in each dose field and residence time of the decommissioning tool in each mesh may be simulated according to the action constraints of the decommissioning tool and the radiation field dose meshes of the processed object, so that the calculated action simulation results of the three-dimensional model of the decommissioning tool include a calculation result of radiation exposure of the tool, which can provide a reference for simulation personnel based on the actual dose calculation results. Specifically, when the simulation personnel holds the decommissioning tool, the simulation personnel may be regarded as a component of the decommissioning tool and participate in analysis of the radiation exposure, and then provide a dose analysis result of the decommissioning tool for the simulation personnel, which can provide a reference for the simulation personnel to optimize operations such as actions and processes.

For example, if the decommissioning tool is a logistics trolley, according to a movement stroke (a behavior attribute) of the logistics trolley, a process module may read the traveling speed (a basic attribute) of the logistics trolley and the radiation field dose meshes (also a basic attribute) of a processed object (for example, a radioactive device exterior sheet), to obtain an action simulation result of a three-dimensional model of the logistics trolley. In another example, if the processed object is a console, a processing process of the console is simulated according to a spatial position change and disintegration of the console in the processing process and radiation field dose meshes of the console, to obtain an action simulation result of a three-dimensional model of the console. The simulation result includes actual dose distribution around the console.

It should be noted that the simulation result also includes the logistics trolley's travel time, speed, direction, and movement path. The movement path of the logistics trolley may be calculated according to the traveling time, the traveling speed, and the travel direction of the logistics trolley.

In S210, the action simulation results of the three-dimensional models of the processed object and the decommissioning tool are simulated based on the preset interactive mode between the processed object and the decommissioning tool, to obtain a target simulation result of the processed object and the decommissioning tool.

Decommissioning tools and preset interactive modes are generally in one-to-one correspondence. For example, if the preset interactive mode is cutting, the decommissioning tool may be a cutting torch. If the preset interactive mode is transport or hoisting, the decommissioning tool may be a hoist.

The target simulation result of the processed object and the decommissioning tool includes a simulation result of the processed object, a simulation result of the decommissioning tool, and the like. Specifically, the target simulation result includes distribution of doses in a simulation process. For example, the processed object is a console and the decommissioning tool is a cutting torch. After action simulation results of three-dimensional models of the console and the cutting torch are obtained, a steel plate outside the console is freely cut to obtain a target simulation result of the console and the cutting torch. Mesh information of the steel plate of the console has been predefined in the basic attribute. The target simulation result of the console and the cutting torch further includes sizes of waste blocks cut in the simulation process. Specifically, the sizes of the waste blocks obtained by cutting the steel plate of the console are determined according to a cutting trajectory of the cutting torch.

In S212, at least two processed objects, the decommissioning tool, and the target simulation result of the processed objects and the decommissioning tool are traversed, and a simulated decommissioning processing plan for the processed objects is generated.

In a decommissioning scene, at least two processed objects and a decommissioning tool are included, the at least two processed objects, the decommissioning tool, and the target simulation result of the processed objects and the decommissioning tool are traversed, and a simulated decommissioning processing plan for the processed objects is generated.

Specifically, the simulated decommissioning processing plan includes a separate simulated decommissioning processing plan for the decommissioning tool and a simulated decommissioning plan for the processed objects and the decommissioning tool.

In the above nuclear facility decommissioning model processing method, a user acquires three-dimensional models of a processed object and a decommissioning tool, and extracts basic attributes, behavior attributes, and engineering attributes of the processed object and the decommissioning tool from pre-established nuclear facility DIM; and calculates, according to source term distribution of the processed object, a three-dimensional radiation field of the processed object and performs meshing, to obtain radiation field dose meshes of the processed object. The user may know intensity of radioactivity of the processed object in real time during the simulation, so as to adjust a process mode of operating the decommissioning tool, and then perform action simulation on the decommissioning tool according to action constraints of the decommissioning tool, and obtain simulation results of the processed object and the decommissioning tool with reference to action characteristics of the decommissioning tool and according to a preset interactive mode between a target device and the decommissioning tool, and finally, target simulation results of other processed objects and other decommissioning tools in a decommissioning simulation system are integrated to generate a simulated decommissioning processing plan for the processed object. According to the method, on the one hand, the user can complete simulation of a decommissioning scene of the target device and generate a simulated decommissioning plan for the processed object only by calling the three-dimensional models of the processed object and the decommissioning tool, which does not require a backend developer to program various models and improves efficiency of decommissioning. On the other hand, according to source term distribution of the processed object, the three-dimensional radiation field of the processed object is obtained, and meshing is performed, to obtain the radiation field dose meshes of the processed object, which can remind an operator of intensity of radioactivity of the target device in real time, so as to provide a reference for operation steps of the operator and ensure safety of the operator.

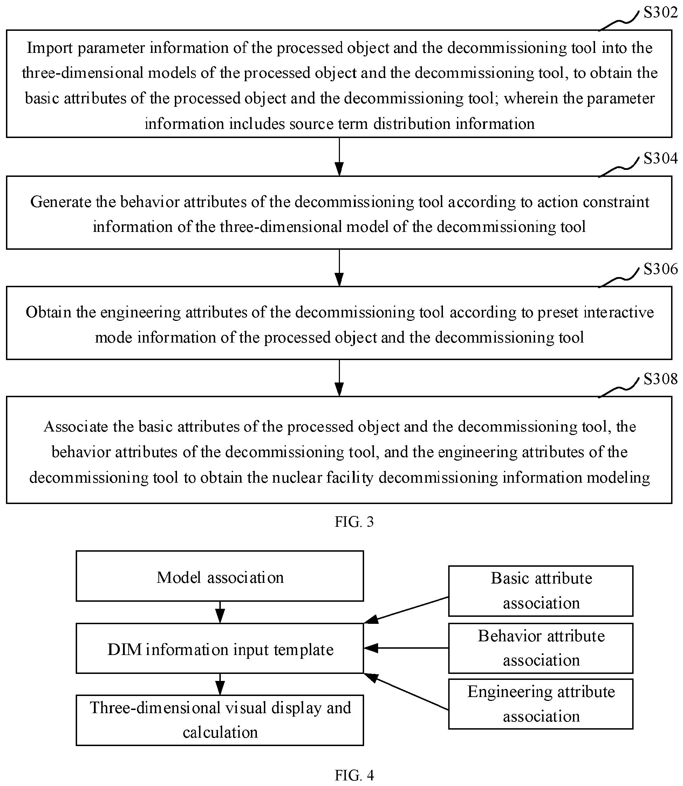

In an embodiment, as shown in FIG. 3, a method for establishing nuclear facility DIM includes the following steps.

In S302, parameter information of the processed object and the decommissioning tool is imported into the three-dimensional models of the processed object and the decommissioning tool, to obtain the basic attributes of the processed object and the decommissioning tool; wherein the parameter information includes source term distribution information.

For the processed object participating in cutting interaction, the parameter information includes input quality, a material, a collision box, and cutting mesh parameters of the cut object, to endow them with the characteristics necessary for cutting, and parameters such as quality and a collision box of the decommissioning tool associated with the processed object.

For the processed object participating in dose assessment interaction, the parameter information includes types, activity, and distribution information of radioactive source nuclides, and setting of a manner of shielding a dose absorption object.

The parameter information of the processed object and the decommissioning tool are imported into the three-dimensional model of the processed object, to obtain the basic attributes of the processed object.

In S304, the behavior attributes of the decommissioning tool are generated according to action constraint information of the three-dimensional model of the decommissioning tool.

The action constraint information of the three-dimensional model of the decommissioning tool includes assembly manners (spatial geometric relationships), attitude control (binding motion programs), action constraints (moving strokes and rotation limits), control panels, and the like.

In S306, the engineering attributes of the decommissioning tool are obtained according to preset interactive mode information of the processed object and the decommissioning tool.

The preset interactive mode information of the processed object and the decommissioning tool refers to functions that the three-dimensional model of the processed object can perform and mutual interactive modes, including cutting, hoisting, carrying, pickup, assembling, climbing, and the like.

The engineering attributes of the decommissioning tool include a preset interactive mode between the processed object and the decommissioning tool. The decommissioning tool may be a specific tool type involved in the interactive mode. For example, a cutting torch is configured to cut the processed object, a hoist is configured to hoist and transport the processed object, or the like.

In S308, the basic attributes of the processed object and the decommissioning tool, the behavior attributes of the decommissioning tool, and the engineering attributes of the decommissioning tool are associated to obtain the nuclear facility DIM.

FIG. 4 is a schematic diagram of construction of nuclear facility DIM. The DIM may be obtained and set according to logic of basic attributes-behavior attributes-engineering attributes.

In this embodiment, nuclear facility DIM of the processed object is constructed through basic logic of basic attributes-behavior attributes-engineering attributes, which integrates the three-dimensional model with data in the database, so that when the system performs simulation and calculation, difficulty of programming by the user can be simplified by means of the information model, lowering a simulation threshold of a nuclear facility decommissioning scene.

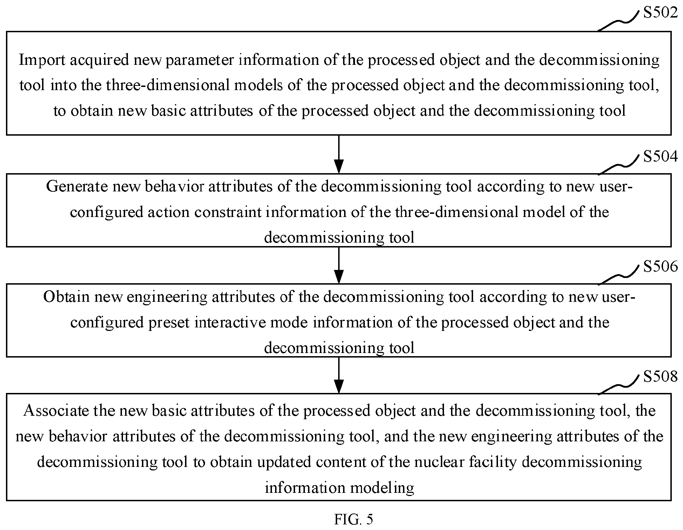

In an embodiment, FIG. 5 is a schematic flowchart of a method for updating nuclear facility DIM, including the following steps.

In S502, acquired new parameter information of the processed object and the decommissioning tool is imported into the three-dimensional models of the processed object and the decommissioning tool, to obtain new basic attributes of the processed object and the decommissioning tool.

While simulation is performed, the parameter information of the processed object and the decommissioning tool may be configured in real time to obtain new parameter information.

Specifically, different parameter information is required to be acquired for different simulation processes of the processed object and the decommissioning tool. For example, parameter information for cutting simulation includes: determining collision between the processed object and the decommissioning tool, and changes in a radiation field caused by collision, falling, and cutting of objects obtained after the processed object is cut. In another example, parameter information for dismantling simulation includes: determining collision and interference of the processed object, and changes in the radiation field during the dismantling. It is to be noted that the changes in the radiation field may be changes in dose meshes.

Newly obtained parameter information is imported into the three-dimensional models of the processed object, to obtain new basic attributes of the processed object.

In S504, new behavior attributes of the decommissioning tool are generated according to newly user-configured action constraint information of the three-dimensional model of the decommissioning tool.

Specifically, action constraint information for cutting simulation includes: a moving speed, a rotation speed, a motion range, and a limit angle of a cutting tool, an operating mode of the cutting tool (automatic-manual), relative movement modes of respective components of the decommissioning tool, and control panel association of the decommissioning tool. After a control panel is associated with the decommissioning tool, the user may control the decommissioning tool according to the control panel. For example, if the decommissioning tool is a logistics trolley, the user controls the logistics trolley to travel via a customized switch or key.

In S506, new engineering attributes of the processed object are obtained according to new user-configured preset interactive mode information of the processed object and the decommissioning tool.

Preset interactive mode information for the cutting simulation includes: determining whether cutting can be performed, a cutting speed, a cutting depth, a slit size, a cutting effect, and the like.

In S508, the new basic attributes of the processed object and the decommissioning tool, the new behavior attributes of the decommissioning tool, and the new engineering attributes of the decommissioning tool are associated to obtain updated content of the nuclear facility DIM.

Additional new parameter information, action constraints, and preset interactive mode information are identified for different simulation processes of the processed object, thereby obtaining the new basic attributes of the processed object and the decommissioning tool, the new behavior attributes of the decommissioning tool, and the new engineering attributes of the decommissioning tool.

Specifically, for a decontamination scene, the new parameter information further includes: determining collision and interference of the processed object. The new action constraint information further includes: a moving speed of a decontamination tool, a rotation speed, a motion range, a limit angle, an operating mode of the decontamination tool (automatic-manual), relative movement modes of respective components of the processed object, and control panel association of the processed object. The new preset interactive mode information further includes: determining whether decontamination can be performed, a decontamination factor, partial/whole decontamination, and decontamination efficiency.

For a dismantling scene, the new parameter information further includes: determining collision and interference of a dismantling tool and changes in the radiation field during the dismantling. The new action constraint information further includes: a moving speed, a rotation speed, a lifting range, and a limit angle of a dismantling tool, an operating mode of the dismantling tool (automatic-manual), relative movement modes of respective components, and control panel association. The new preset interactive mode information further includes: determining whether the dismantling tool can operate (an electric hammer drill, an elevator, a hydraulic jack, a hammer, or the like), and a dismantling speed.

For a conditioning scene, the new parameter information further includes: determining collision and accumulation of waste and conditioning containers. The new action constraint information further includes: a moving speed, a rotation speed, a lifting range, and a limit angle of a conditioning tool, an operating mode of the conditioning tool (automatic-manual), relative movement modes of respective components, and control panel association. The new preset interactive mode information further includes: determining whether the conditioning tool can operate (a gripper size and a load capacity), whether a type of the waste container is appropriate, and a conditioning speed.

Sorting and lifting scenes are similar to the conditioning scene, and are not described in detail herein.

For a transport scene, the new parameter information further includes: determining collision and accumulation of waste and conditioning containers. The new action constraint information further includes: a moving speed, a rotation speed, a lifting range, and a limit angle of a transport tool, an operating mode of the transport tool (automatic-manual), relative movement modes of respective components, and control panel association. The new preset interactive mode information further includes: determining whether the transport tool is appropriate (selection of a crane and a flatbed truck) and a transport speed. The new basic attributes, behavior attributes, and engineering attributes above are associated to obtain updated content of the nuclear facility DIM.

In this embodiment, the nuclear facility DIM is updated so that the nuclear facility DIM adapts to an on-site environment, which can improve simulation efficiency, thereby improving efficiency of actual decommissioning of nuclear facilities.

In an embodiment, the preset interactive mode includes at least two interactive modes between the processed object and the decommissioning tool, and the step of simulating the action simulation results of the three-dimensional models of the processed object and the decommissioning tool based on the preset interactive mode between the processed object and the decommissioning tool, to obtain a target simulation result of the processed object and the decommissioning tool includes: acquiring the at least two interactive modes between the processed object and the decommissioning tool; changing a preset order of the interaction modes between the processed object and the decommissioning tool, and simulating the action simulation results of the three-dimensional models of the processed object and the decommissioning tool, to obtain at least two temporary simulation results of the processed object and the decommissioning tool; and determining the target simulation result from the at least two temporary simulation results.

The preset order of the interaction modes between the processed object and the decommissioning tool refers to an execution order of the at least two interactive modes. For example, if the interactive modes are cutting and decontamination, the preset order may be first cutting and then decontamination or first decontamination and then cutting, and an execution process of a single interactive mode, such as adjustment of a cutting trajectory and a cutting depth.

The preset order may be changed according to a strategy of the simulation personnel.

The temporary simulation results include a project progress, waste statistics, cost estimation, and dose assessment of the current simulation.

The project progress means calling engineering attributes, behavior attributes, and basic attributes of various information models to obtain operation time of each task, including: (1) a number of personnel, preparation time, a traveling speed, and operating efficiency; (2) numbers and types of operating tools, mounting and dismounting efficiency, traveling speeds, and operating efficiency; (3) processing efficiency and effects of different processes and methods (such as reaction time of a decontamination reagent and waiting time for switching between different processes); and (4) establishment of an operating environment (such as specified air circulation purification and site cleaning time). Then, organization is performed according to establishment time of personnel, tools, processes, and environments in combination with parallel and serial modes of tasks, to complete statistics on the project progress (workload).

The waste statistics means calling the basic attributes of the information models to obtain the following information and calculating waste generated by the user when performing each task, including: (1) consumption rates of labor protection supplies related to personnel workload; (2) generation rates of secondary waste related to the operating tools and processing processes; and (3) generation (conversion) rates of direct waste resulting from cutting, dismantling, and conditioning related to the processed object.

The cost estimation means calling the basic attributes of the information models to obtain the following information and calculating a cost required by the user to perform each task, including: (1) personnel, tool operating time, and a unit price; and (2) unit prices of consumable parts of operating tools. Then, various personnel and device operating time calculated are combined through process simulation to complete the cost estimation.

The dose assessment means calling the basic attributes of the information models to obtain the following information and calculating a dose received by the personnel and the tools when performing each task, including: (1) types, activity, and distribution of nuclides in radioactive items; and (2) radiation shielding modes of the personnel and the tools.

"Determining the target simulation result from the at least two temporary simulation results" may be obtaining differentiated assessment results from project progress, waste statistics, cost estimation, and dose assessment results in the temporary simulation results. For example, if the user prefers the shortest simulation time, the temporary simulation result with a minimum project progress may be selected from the temporary simulation results as the target simulation result. If the user prefers less dose assessment, the temporary simulation result with the least dose evaluation may be selected from the temporary simulation results as the target simulation result.

In this embodiment, the preset order of the interactive modes between the processed object and the decommissioning tool is freely changed, the action simulation results of the three-dimensional models of the processed object and the decommissioning tool are simulated, to obtain the at least two temporary simulation results of the processed object and the decommissioning tool, differences between respective simulation results in the at least two temporary simulation results are determined, and the temporary simulation result meeting a requirement is selected as the target simulation result, which can provide the user with the most suitable target simulation result and improve a simulation effect.

In an embodiment, the determining the target simulation result from the at least two temporary simulation results includes: calculating estimated operation time in the at least two temporary simulation results of the processed object and the decommissioning tool; and taking the simulation result with the shorter estimated operation time in the at least two temporary simulation results as the target simulation result of the processed object and the decommissioning tool.

"Determining the target simulation result from the at least two temporary simulation results" may be obtaining differentiated assessment results from project progress, waste statistics, cost estimation, and dose assessment results in the temporary simulation results. For example, if the user prefers the shortest simulation time, the temporary simulation result with a minimum project progress may be selected from the temporary simulation results as the target simulation result.

Alternatively, the simulation result with a lower estimated radiation dose may alternatively be selected from the at least two temporary simulation results as the target simulation result of the processed object and the decommissioning tool. Alternatively, weights may be set for estimated operation time and an estimated radiation dose in advance, scores of the estimated operation time and the estimated radiation dose in the temporary simulation results are determined according to the weights, scores of radiation doses and operation time of the temporary simulation results are compared, and the temporary simulation result meeting the requirement of the user is selected as the target simulation result of the processed object and the decommissioning tool.

In this embodiment, the simulation result with less estimated operation time is selected from the temporary simulation results as the target simulation result, which can ensure the simulation effect while improving efficiency of simulation, thereby improving efficiency of actual decommissioning of nuclear facilities.

In an embodiment, the target simulation result of the processed object and the decommissioning tool includes a waste statistics result, a cost estimation result, and a dose assessment result, and the method further includes: inputting the waste statistics result, the cost estimation result, and the dose assessment result into an evaluation algorithm model to obtain a quantitative evaluation result of a simulated decommissioning plan of the processed object.

The waste statistics result may include: (1) consumption rates of labor protection supplies related to personnel workload; (2) generation rates of secondary waste related to the operating tools and processing processes; and (3) generation (conversion) rates of direct waste resulting from cutting, dismantling, and conditioning related to the processed object.

The cost estimation result may include: (1) personnel, tool operating time, and a unit price; and (2) unit prices of consumable parts of operating tools. Then, the calculated operating times for various personnel and devices are combined through process simulation to complete the cost estimation.

The dose assessment result may include: (1) types, activity, and distribution of nuclides in radioactive items; and (2) radiation shielding modes of the personnel and the tools.

Indexes of the evaluation algorithm model are graded to obtain graded evaluation indexes, and the waste statistics, cost estimation, and dose assessment results are input into the evaluation algorithm model, and different evaluation indexes are assigned thereto. If the user prefers a lower-cost simulated decommissioning processing plan, the weight of the evaluation index of the cost estimation result is increased. If the user prefers to a safer simulated decommissioning processing plan, the weight of the evaluation index of the dose assessment result is increased. If the user prefers to an easy-to-maintain simulated decommissioning processing plan, the weight of the evaluation index of the waste statistics result is increased.

In this embodiment, the waste statistics result, the cost estimation result, the dose assessment result are inputted into the evaluation algorithm model to obtain multi-dimensional plan analysis and evaluation, which can obtain quantitative evaluation results and improve the simulation effect.

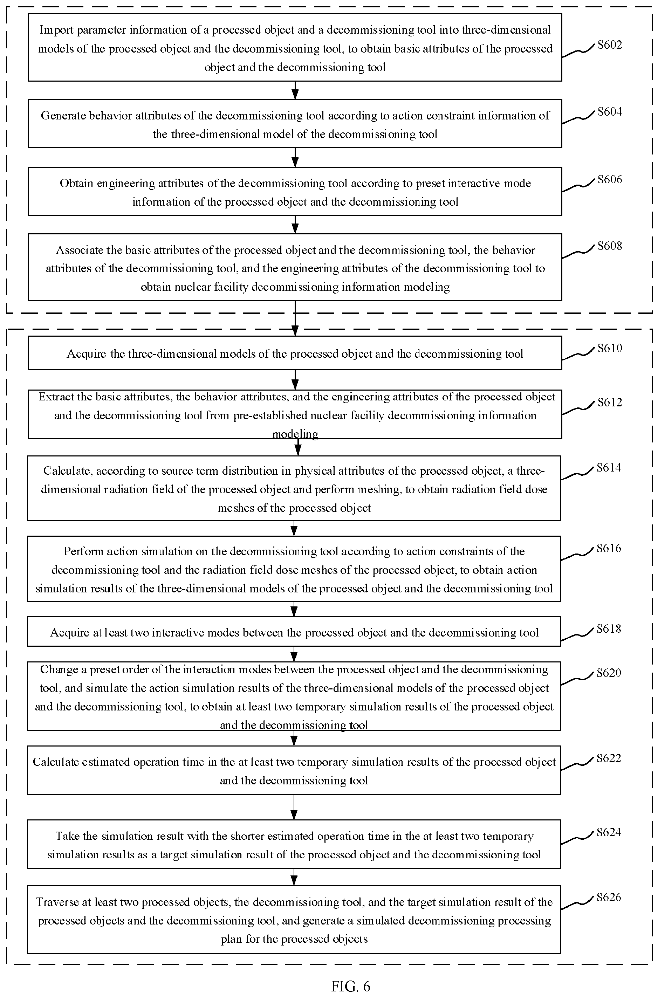

In an embodiment, as shown in FIG. 6, a nuclear facility decommissioning model processing method is provided, including the following steps.

A first part, i.e., a part of establishment of nuclear facility DIM, includes the following steps.

In S602, parameter information for a processed object and a decommissioning tool is imported into three-dimensional models of the processed object and the decommissioning tool, to obtain basic attributes of the processed object and the decommissioning tool.

The parameter information includes source term distribution information.

In S604, behavior attributes of the decommissioning tool are generated according to action constraint information of the three-dimensional model of the decommissioning tool.

In S606, engineering attributes of the decommissioning tool are obtained according to preset interactive mode information of the processed object and the decommissioning tool.

In S608, the basic attributes of the processed object and the decommissioning tool, the behavior attributes of the decommissioning tool, and the engineering attributes of the decommissioning tool are associated to obtain nuclear facility DIM.

Newly acquired parameter information for the processed object and the decommissioning tool is imported into the three-dimensional models of the processed object and the decommissioning tool, to obtain new basic attributes of the processed object and the decommissioning tool; new behavior attributes of the decommissioning tool are generated according to new user-configured action constraint information of the three-dimensional model of the decommissioning tool; new engineering attributes of the decommissioning tool are obtained according to new user-configured preset interactive mode information of the processed object and the decommissioning tool; and the new basic attributes of the processed object and the decommissioning tool, the new behavior attributes of the decommissioning tool, and the new engineering attributes of the decommissioning tool are associated to obtain updated content of the nuclear facility DIM.

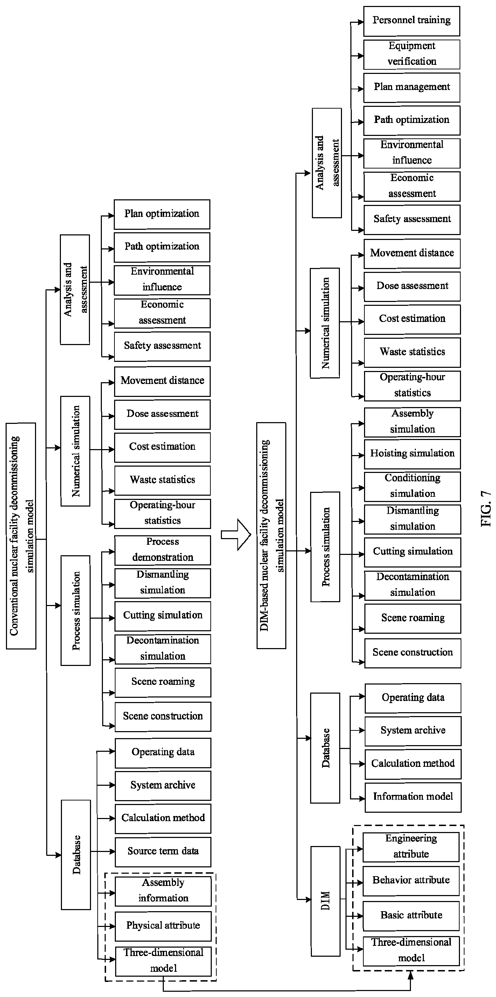

Specifically, in a comparison diagram of a nuclear facility decommissioning simulation system as shown in FIG. 7, the current nuclear facility decommissioning simulation system basically includes a database, process simulation, numerical calculation, and analysis and assessment modules. The database includes models, parameters, and various algorithms, which is a basis. Simulation and scenes are a core of a virtual simulation system and are tools for process planning and construction personnel operation training. An assessment system is process planning output. However, in these systems, the three-dimensional model and other parameters in the database cannot be integrated together, and the system also calls the models and the parameters through manual programming when performing simulation and calculation. Each time a new model or data is imported offline, corresponding updates to the models, data, and programs are required on the backend. A DIM-based nuclear facility decommissioning simulation system integrates the three-dimensional models and the parameters into a DIM module and is independent from the database of the system to form at least five modules, including five functional modules such as a DIM module, a system database module, a process simulation module, a numerical simulation module, and an intelligent analysis module.

A second part, i.e., a part of use of nuclear facility DIM, includes the following steps.

In S610, three-dimensional models of a processed object and a decommissioning tool are acquired.

In S612, the basic attributes, the behavior attributes, and the engineering attributes of the processed object and the decommissioning tool are extracted from pre-established nuclear facility DIM.

The basic attributes of the processed object include physical attributes of the processed object, the basic attributes of the decommissioning tool include physical attributes of the decommissioning tool, the behavior attributes of the decommissioning tool include action constraints of the decommissioning tool, and the engineering attributes of the decommissioning tool include a preset interactive mode between the processed object and the decommissioning tool.

In S614, according to source term distribution in physical attributes of the processed object, a three-dimensional radiation field of the processed object is calculated and meshing is performed, to obtain radiation field dose meshes of the processed object.

In S616, action simulation is performed on the decommissioning tool according to action constraints of the decommissioning tool and the radiation field dose meshes of the processed object, to obtain action simulation results of the three-dimensional models of the processed object and the decommissioning tool.

In S618, at least two interactive modes between the processed object and the decommissioning tool are acquired.

In S620, a preset order of the interaction modes between the processed object and the decommissioning tool is changed, and the action simulation results of the three-dimensional models of the processed object and the decommissioning tool are simulated, to obtain at least two temporary simulation results of the processed object and the decommissioning tool.

In S622, estimated operation time in the at least two temporary simulation results of the processed object and the decommissioning tool is calculated.

In S624, the simulation result with the shorter estimated operation time in the at least two temporary simulation results is taken as a target simulation result of the processed object and the decommissioning tool.

In S626, at least two processed objects, the decommissioning tool, and the target simulation result of the processed objects and the decommissioning tool are traversed, and a simulated decommissioning processing plan for the processed objects is generated.

A DIM three-dimensional model, the basic attributes, the behavior attributes, and the engineering attributes may be simulated by using the nuclear facility decommissioning simulation system, to generate the simulated decommissioning processing plan for the processed object.

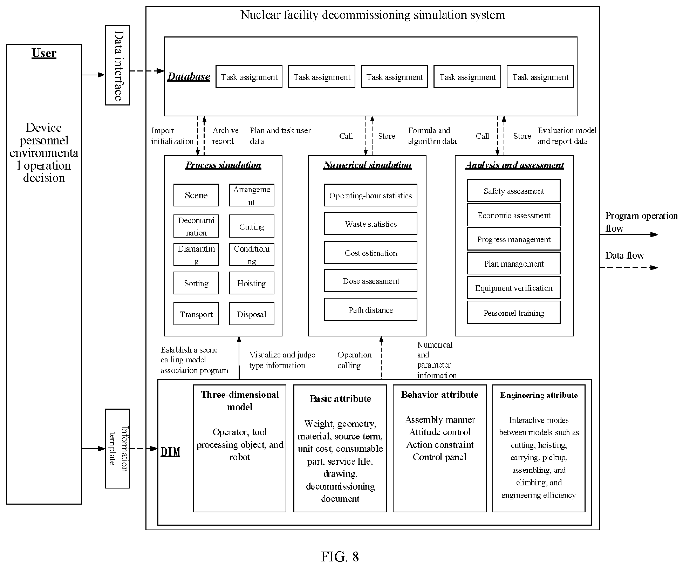

Specifically, FIG. 8 is a schematic structural diagram of a nuclear facility decommissioning simulation system, including the following modules.

A DIM module binds three-dimensional models of personnel, tools, and nuclear facility SSCs with basic attributes, behavior attributes, and engineering attributes in advance. Therefore, physical parameters (basic attributes), operating parameters and control modes (behavior attributes), modes of interaction with other models, and engineering parameters (engineering attributes) of each model are defined at once.

A process simulation module programs a variety of drivers in advance, and associates the drivers with parameters at a specified position in a DIM information template. When the user calls the model from the DIM module, the module automatically reads the corresponding data in the information template and drives the model to carry out simulation.

A numerical simulation module follows a decommissioning simulation process, and calls the parameters of the DIM information template to calculate operating hours, a waste volume, and other values.

An analysis and evaluation module introduces an evaluation algorithm model in a specified direction based on numerical simulation results, to perform multi-dimensional plan analysis and evaluation.

A database stores, records, archives, and exports various data generated during user input and system operation.

In S628, the waste statistics result, the cost estimation result, and the dose assessment result are inputted into an evaluation algorithm model to obtain a quantitative evaluation result of a simulated decommissioning plan of the processed object.

In this embodiment, the user acquires a three-dimensional model of a processed object, and extracts basic attributes, behavior attributes, and engineering attributes of the processed object from pre-established nuclear facility DIM; and calculates, according to source term distribution of the processed object, a three-dimensional radiation field of the processed object and performs meshing, to obtain radiation field dose meshes of the processed object. The user may know intensity of radioactivity of a target device in real time during the simulation, so as to adjust the process mode for the decommissioning tool, and then perform action simulation on the processed object according to action constraints of the processed object, and obtain simulation results of the processed object and the decommissioning tool with reference to action characteristics of the processed object and according to a preset interactive mode between the target device and the decommissioning tool, simulation results of the processed object and the decommissioning tool are generated, and finally, target simulation results of other processed objects and other related devices in a decommissioning simulation system are integrated to generate a simulated decommissioning processing plan for the processed object. According to the method, on the one hand, the user can complete simulation of a decommissioning scene of the target device and generate a simulated decommissioning plan for the processed object only by calling the three-dimensional model of the processed object, which does not require a backend developer to program various models and improves efficiency of decommissioning. On the other hand, according to source term distribution of the processed object, the three-dimensional radiation field of the processed object is obtained, and meshing is performed, to obtain the radiation field dose meshes of the processed object, which can remind an operator of intensity of radioactivity of a target system, buildings (structures), and devices (SSCs) in real time, so as to provide a reference for operation steps of the operator and ensure safety of the operator. According to the method, (1) nuclear facility DIM is proposed, and the user imports various information and a three-dimensional model into a database according to a standard format in advance, achieving a high degree of integration of the three-dimensional model and various simulation information, in a subsequent simulation stage, the system directly and automatically reads the corresponding data in the information template, and a driver carries out simulation. In addition to allowing the user to import any model to ensure versatility of the system, the model can simulate various processes of the model by automatically reading the corresponding data in the information template through a preprogrammed driver, improving a degree of freedom of the system. (2) The nuclear facility DIM includes four types of data: three-dimensional models, basic attributes, behavior attributes, and engineering attributes. Various parameter information of the basic attributes may be basic numerical input for subsequent calculation of nuclear facility decommissioning simulation. The behavior attributes determine an internal operation mode of each model and bind the corresponding driver and the control panel to realize simulation of a single model. The engineering attributes determine functions performed and interactions between a plurality of models. (3) Based on a DIM technology, a new nuclear facility decommissioning simulation system structure is proposed, including a DIM module, a system database module, a process simulation module, a numerical simulation module, and an intelligent analysis module. The DIM module may guide the user to follow the logic of "basic attributes-behavior attributes-engineering attributes" to bind required information for each model and import a new target model according to a task requirement. During the simulated decommissioning plan, the process simulation module directly calls a model creation scene from the DIM module and binds a corresponding driver according to information inputted at each specific position in the DIM module, which does not require secondary programming by a backend developer. The numerical simulation module calculates corresponding decommissioning plan reference data from physical parameters, motion parameters, and operating parameters inputted from the DIM according to the simulation process in which each model participates. The analysis and evaluation module introduces an evaluation algorithm model in a specified direction based on numerical simulation results, to perform multi-dimensional plan analysis and evaluation. It should be understood that, although the operations in the flowcharts involved in the embodiments above are shown in sequence as indicated by the arrows, the operations are not necessarily performed in the order indicated by the arrows. Unless otherwise clearly specified herein, the operations are performed without any strict sequence limitation, and may be performed in other orders. In addition, at least some operations involved in the embodiments above may include a plurality of steps or a plurality of stages, and such steps or stages are not necessarily performed at a same moment, and may be performed at different moments. The steps or stages are not necessarily performed in sequence, and the steps or stages and at least some of other steps or steps or stages of other steps may be performed repeatedly or alternately.

Based on a same inventive concept, the embodiments of the present application further provide a nuclear facility decommissioning model processing apparatus configured to implement the nuclear facility decommissioning model processing method as described above. The implementation solution for solving the problem provided by the apparatus is similar to the implementation solution described in the above method, so specific limitations in one or more embodiments of the nuclear facility decommissioning model processing apparatus provided below may be obtained with reference to the above limitations on the nuclear facility decommissioning model processing method, which are not described in detail herein.

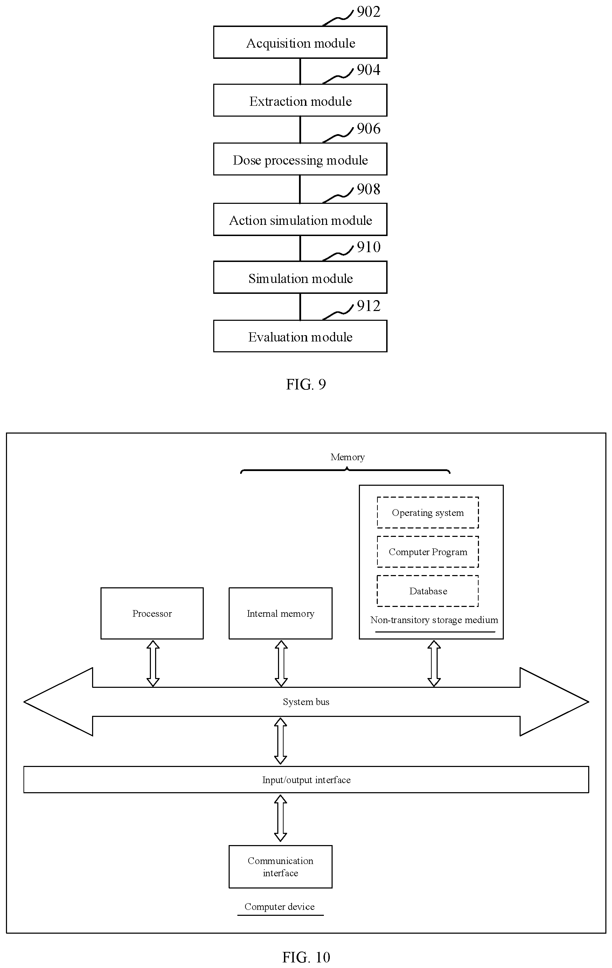

In an embodiment, as shown in FIG. 9, a nuclear facility decommissioning model processing apparatus is provided, including: an acquisition module 902, an extraction module 904, a dose processing module 906, an action simulation module 908, a simulation module 910, and an evaluation module 912.

The acquisition module 902 is configured to acquire three-dimensional models of a processed object and a decommissioning tool.

The extraction module 904 is configured to extract basic attributes, behavior attributes, and engineering attributes of the processed object and the decommissioning tool from pre-established nuclear facility DIM. The basic attributes of the processed object include physical attributes of the processed object, the basic attributes of the decommissioning tool include physical attributes of the decommissioning tool, the behavior attributes of the decommissioning tool include action constraints of the decommissioning tool, and the engineering attributes of the decommissioning tool include a preset interactive mode between the processed object and the decommissioning tool.

The dose processing module 906 is configured to calculate, according to source term distribution in the physical attributes of the processed object, a three-dimensional radiation field of the processed object and perform meshing, to obtain radiation field dose meshes of the processed object.

The action simulation module 908 is configured to perform action simulation on the decommissioning tool according to the action constraints of the decommissioning tool and the radiation field dose meshes of the processed object, to obtain action simulation results of the three-dimensional models of the processed object and the decommissioning tool.

The simulation module 910 is configured to simulate the action simulation results of the three-dimensional models of the processed object and the decommissioning tool based on the preset interactive mode between the processed object and the decommissioning tool, to obtain a target simulation result of the processed object and the decommissioning tool.

The evaluation module 912 is configured to traverse at least two processed objects, the decommissioning tool, and the target simulation result of the processed objects and the decommissioning tool, and generate a simulated decommissioning processing plan for the processed objects.

In an embodiment, the nuclear facility decommissioning model processing apparatus further includes a model establishment module configured to import parameter information of the processed object and the decommissioning tool into the three-dimensional models of the processed object and the decommissioning tool, to obtain the basic attributes of the processed object and the decommissioning tool; wherein the parameter information includes source term distribution information; generate the behavior attributes of the decommissioning tool according to action constraint information of the three-dimensional model of the decommissioning tool; obtain the engineering attributes of the decommissioning tool according to the preset interactive mode information of the processed object and the decommissioning tool; and associate the basic attributes of the processed object and the decommissioning tool, the behavior attributes of the decommissioning tool, and the engineering attributes of the decommissioning tool to obtain nuclear facility DIM.

In an embodiment, the model establishment module is further configured to import acquired new parameter information of the processed object and the decommissioning tool into the three-dimensional models of the processed object and the decommissioning tool, to obtain new basic attributes of the processed object and the decommissioning tool; generate new behavior attributes of the decommissioning tool according to new user-configured action constraint information of the three-dimensional model of the decommissioning tool; obtain new engineering attributes of the decommissioning tool according to new user-configured preset interactive mode information of the processed object and the decommissioning tool; and associate the new basic attributes of the processed object and the decommissioning tool, the new behavior attributes of the decommissioning tool, and the new engineering attributes of the decommissioning tool to obtain updated content of the nuclear facility DIM.

In an embodiment, the preset interactive mode includes at least two interactive modes between the processed object and the decommissioning tool, and the simulation module 910 is further configured to acquire the at least two interactive modes between the processed object and the decommissioning tool; change the preset order of the interaction modes between the processed object and the decommissioning tool, and simulating the action simulation results of the three-dimensional models of the processed object and the decommissioning tool, to obtain at least two temporary simulation results of the processed object and the decommissioning tool; and determine the target simulation result from the at least two temporary simulation results.

In an embodiment, the simulation module 910 is further configured to calculate estimated operation time in the at least two temporary simulation results of the processed object and the decommissioning tool; and take the simulation result with the shorter estimated operation time in the at least two temporary simulation results as the target simulation result of the processed object and the decommissioning tool.

In an embodiment, the nuclear facility decommissioning model processing apparatus further includes a prediction module that inputs the waste statistics result, the cost estimation result, and the dose assessment result into an evaluation algorithm model to obtain a quantitative evaluation result of a simulated decommissioning plan of the processed object.

The modules in the above nuclear facility decommissioning model processing apparatus may be implemented entirely or partially by software, hardware, or a combination thereof. The above modules may be built in or independent of a processor of a computer device in a hardware form, or may be stored in a memory of the computer device in a software form, so that the processor invokes and performs operations corresponding to the above modules.

In an embodiment, a computer device is provided. The computer device may be a server. A diagram of an internal structure thereof may be shown in FIG. 10. The computer device includes a processor, a memory, an input/output (I/O) interface, and a communication interface. The processor, the memory, and the I/O interface are connected by using a system bus. The communication interface is connected to the system bus through the I/O interface. The processor of the computer device is configured to provide computing and control capabilities. The memory of the computer device includes a non-transitory storage medium and an internal memory. The non-transitory storage medium stores an operating system, a computer program, and a database. The internal memory provides an environment for running of the operating system and the computer program in the non-transitory storage medium. The database of the computer device is configured to store three-dimensional model data. The I/O interface of the computer device is configured to exchange information between the processor and an external device. The communication interface of the computer device is configured to communicate with an external terminal through a network connection. The computer program is executed by the processor to implement a nuclear facility decommissioning model processing method.

In an embodiment, a computer device is provided, including a memory and a processor. The memory stores a computer program. The processor, when executing the computer program, implements the above method steps.

In an embodiment, a computer-readable storage medium is provided, having a computer program stored therein, wherein when the computer program is executed by a processor, the above method steps are implemented.

In an embodiment, a computer program product is provided, including a computer program, wherein when the computer program is executed by a processor, the above method steps are implemented.

It is to be noted that user information (including, but not limited to, user equipment information, user personal information, and the like) and data (including, but not limited to, data for analysis, stored data, displayed data, and the like) involved in the present application are all authorized by the user or information and data fully authorized by all parties, and collection, use and processing of relevant data are required to comply with relevant laws, regulations, and standards of relevant countries and regions.

Those of ordinary skill in the art may understand that all or some of procedures of the method in the foregoing embodiments may be implemented by a computer program instructing relevant hardware. The computer program may be stored in a non-transitory computer-readable storage medium. When the computer program is executed, the procedures of the foregoing method embodiments may be implemented. Any reference to a memory, storage, a database, or another medium used in the embodiments provided in the present application may include at least one of a non-transitory memory and a transitory memory. The non-transitory memory may include a read-only memory (ROM), a magnetic tape, a floppy disk, a flash memory, an optical memory, a high-density embedded non-transitory memory, a resistive random access memory (ReRAM), a magnetoresistive random access memory (MRAM), a ferroelectric random access memory (FRAM), a phase change memory (PCM), a graphene memory, and the like. The transitory memory may include a random access memory (RAM) or an external cache. By way of description and not limitation, the RAM may be in various forms, such as a static random access memory (SRAM), a dynamic random access memory (DRAM), or the like. The database as referred to in the embodiments according to the present application may include at least one of a relational database and a non-relational database. The non-relational database may include a blockchain-based distributed database, but is not limited thereto. The processor as referred to in the embodiments according to the present application may be a general-purpose processor, a central processing unit, a graphics processor, a digital signal processor, a programmable logic device, a data processing logic device based on quantum computing, or the like, but is not limited thereto.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A nuclear facility decommissioning model processing method, comprising:
acquiring three-dimensional models of a processed object and a decommissioning tool;
extracting basic attributes, behavior attributes, and engineering attributes of the processed object and the decommissioning tool from pre-established nuclear facility decommissioning information modeling; wherein the basic attributes of the processed object comprise physical attributes of the processed object, the basic attributes of the decommissioning tool comprise physical attributes of the decommissioning tool, the behavior attributes of the decommissioning tool comprise action constraints of the decommissioning tool, and the engineering attributes of the decommissioning tool comprise a preset interactive mode between the processed object and the decommissioning tool;
calculating, according to source term distribution in the physical attributes of the processed object, a three-dimensional radiation field of the processed object and performing meshing, to obtain radiation field dose meshes of the processed object;
performing action simulation on the decommissioning tool according to the action constraints of the decommissioning tool and the radiation field dose meshes of the processed object, to obtain action simulation results of the three-dimensional models of the processed object and the decommissioning tool;
simulating the action simulation results of the three-dimensional models of the processed object and the decommissioning tool based on the preset interactive mode between the processed object and the decommissioning tool, to obtain a target simulation result of the processed object and the decommissioning tool;
traversing at least two processed objects, the decommissioning tool, and the target simulation result of the processed objects and the decommissioning tool, and generating a simulated decommissioning processing plan for the processed objects.

2. The method according to claim 1, wherein a method for establishing the nuclear facility decommissioning information modeling comprises:
importing parameter information of the processed object and the decommissioning tool into the three-dimensional models of the processed object and the decommissioning tool, to obtain the basic attributes of the processed object and the decommissioning tool; wherein the parameter information comprises source term distribution information;
generating the behavior attributes of the decommissioning tool according to action constraint information of the three-dimensional model of the decommissioning tool;
obtaining the engineering attributes of the decommissioning tool according to preset interactive mode information of the processed object and the decommissioning tool;
associating the basic attributes of the processed object and the decommissioning tool, the behavior attributes of the decommissioning tool, and the engineering attributes of the decommissioning tool to obtain the nuclear facility decommissioning information modeling.

3. The method according to claim 2, wherein a method for updating the nuclear facility decommissioning information modeling further comprises:
importing acquired new parameter information of the processed object and the decommissioning tool into the three-dimensional models of the processed object and the decommissioning tool, to obtain new basic attributes of the processed object and the decommissioning tool;
generating new behavior attributes of the decommissioning tool according to new user-configured action constraint information of the three-dimensional model of the decommissioning tool;
obtaining new engineering attributes of the decommissioning tool according to new user-configured preset interactive mode information of the processed object and the decommissioning tool;
associating the new basic attributes of the processed object and the decommissioning tool, the new behavior attributes of the decommissioning tool, and the new engineering attributes of the decommissioning tool to obtain updated content of the nuclear facility decommissioning information modeling.

4. The method according to claim 1, wherein the preset interactive mode comprises at least two interactive modes between the processed object and the decommissioning tool, and the step of simulating the action simulation results of the three-dimensional models of the processed object and the decommissioning tool based on the preset interactive mode between the processed object and the decommissioning tool, to obtain a target simulation result of the processed object and the decommissioning tool comprises:
acquiring the at least two interactive modes between the processed object and the decommissioning tool;
changing a preset order of the interaction modes between the processed object and the decommissioning tool, and simulating the action simulation results of the three-dimensional models of the processed object and the decommissioning tool, to obtain at least two temporary simulation results of the processed object and the decommissioning tool;
determining the target simulation result from the at least two temporary simulation results.

5. The method according to claim 4, wherein the determining the target simulation result from the at least two temporary simulation results comprises:
calculating estimated operation time in the at least two temporary simulation results of the processed object and the decommissioning tool;
taking the simulation result with the shorter estimated operation time in the at least two temporary simulation results as the target simulation result of the processed object and the decommissioning tool.

6. The method according to claim 1, wherein the target simulation result of the processed object and the decommissioning tool comprises a waste statistics result, a cost estimation result, and a dose assessment result, and the method further comprises:
inputting the waste statistics result, the cost estimation result, and the dose assessment result into an evaluation algorithm model to obtain a quantitative evaluation result of a simulated decommissioning plan of the processed object.

7. A nuclear facility decommissioning model processing apparatus, comprising:
an acquisition module configured to acquire three-dimensional models of a processed object and a decommissioning tool;
an extraction module configured to extract basic attributes, behavior attributes, and engineering attributes of the processed object and the decommissioning tool from pre-established nuclear facility decommissioning information modeling; wherein the basic attributes of the processed object comprise physical attributes of the processed object, the basic attributes of the decommissioning tool comprise physical attributes of the decommissioning tool, the behavior attributes of the decommissioning tool comprise action constraints of the decommissioning tool, and the engineering attributes of the decommissioning tool comprise a preset interactive mode between the processed object and the decommissioning tool;
a dose processing module configured to calculate, according to source term distribution in the physical attributes of the processed object, a three-dimensional radiation field of the processed object and perform meshing, to obtain radiation field dose meshes of the processed object;
an action simulation module configured to perform action simulation on the decommissioning tool according to the action constraints of the decommissioning tool and the radiation field dose meshes of the processed object, to obtain action simulation results of the three-dimensional models of the processed object and the decommissioning tool;
a simulation module configured to simulate the action simulation results of the three-dimensional models of the processed object and the decommissioning tool based on the preset interactive mode between the processed object and the decommissioning tool, to obtain a target simulation result of the processed object and the decommissioning tool;
an assessment module configured to traverse at least two processed objects, the decommissioning tool, and the target simulation result of the processed objects and the decommissioning tool, and generate a simulated decommissioning processing plan for the processed objects.

8. A computer device, comprising a memory and a processor, the memory storing a computer program, wherein when the processor executes the computer program, steps of the method according to any one of claims 1 to 6 are implemented.

9. A computer-readable storage medium, having a computer program stored therein, wherein when the computer program is executed by a processor, steps of the method according to any one of claims 1 to 6 are implemented.

10. A computer program product, comprising a computer program, wherein when the computer program is executed by a processor, steps of the method according to any one of claims 1 to 6 are implemented.

## Patentansprüche

1. Ein Verfahren zur Verarbeitung eines Rückbaumodells einer kerntechnischen Anlage, umfassend:
Erfassen dreidimensionaler Modelle eines verarbeiteten Objekts und eines Rückbauwerkzeugs;
Extrahieren von Basisattributen, Verhaltensattributen und technischen Attributen des verarbeiteten Objekts und des Rückbauwerkzeugs aus einer vorab erstellten Informationsmodellierung des Rückbaus einer kerntechnischen Anlage; wobei die Basisattribute des verarbeiteten Objekts physikalische Attribute des verarbeiteten Objekts umfassen, die Basisattribute des Rückbauwerkzeugs physikalische Attribute des Rückbauwerkzeugs umfassen, die Verhaltensattribute des Rückbauwerkzeugs Aktionsbeschränkungen des Rückbauwerkzeugs umfassen, und die technischen Attribute des Rückbauwerkzeugs einen voreingestellten Interaktionsmodus zwischen dem verarbeiteten Objekt und dem Rückbauwerkzeug umfassen;
Berechnen, gemäß einer Quelltermverteilung in den physikalischen Attributen des verarbeiteten Objekts, eines dreidimensionalen Strahlungsfeldes des verarbeiteten Objekts und Durchführen einer Vernetzung, um Strahlungsfeld-Dosisnetze des verarbeiteten Objekts zu erhalten;
Durchführen einer Aktionssimulation an dem Rückbauwerkzeug gemäß den Aktionsbeschränkungen des Rückbauwerkzeugs und den Strahlungsfeld-Dosisnetzen des verarbeiteten Objekts, um Aktionssimulationsergebnisse der dreidimensionalen Modelle des verarbeiteten Objekts und des Rückbauwerkzeugs zu erhalten;
Simulieren der Aktionssimulationsergebnisse der dreidimensionalen Modelle des verarbeiteten Objekts und des Rückbauwerkzeugs auf der Grundlage des voreingestellten Interaktionsmodus zwischen dem verarbeiteten Objekt und dem Rückbauwerkzeug, um ein Zielsimulationsergebnis des verarbeiteten Objekts und des Rückbauwerkzeugs zu erhalten;
Durchlaufen von mindestens zwei verarbeiteten Objekten, dem Rückbauwerkzeug und dem Zielsimulationsergebnis der verarbeiteten Objekte und des Rückbauwerkzeugs, und Erzeugen eines simulierten Rückbau-Verarbeitungsplans für die verarbeiteten Objekte.

2. Verfahren nach Anspruch 1, wobei ein Verfahren zum Erstellen der Informationsmodellierung des Rückbaus einer kerntechnischen Anlage umfasst:
Importieren von Parameterinformationen des verarbeiteten Objekts und des Rückbauwerkzeugs in die dreidimensionalen Modelle des verarbeiteten Objekts und des Rückbauwerkzeugs, um die Basisattribute des verarbeiteten Objekts und des Rückbauwerkzeugs zu erhalten; wobei die Parameterinformationen Quelltermverteilungsinformationen umfassen;
Erzeugen der Verhaltensattribute des Rückbauwerkzeugs gemäß Aktionsbeschränkungsinformationen des dreidimensionalen Modells des Rückbauwerkzeugs;
Erhalten der technischen Attribute des Rückbauwerkzeugs gemäß voreingestellten Interaktionsmodusinformationen des verarbeiteten Objekts und des Rückbauwerkzeugs;
Verknüpfen der Basisattribute des verarbeiteten Objekts und des Rückbauwerkzeugs, der Verhaltensattribute des Rückbauwerkzeugs und der technischen Attribute des Rückbauwerkzeugs, um die Informationsmodellierung des Rückbaus einer kerntechnischen Anlage zu erhalten.

3. Verfahren nach Anspruch 2, wobei ein Verfahren zum Aktualisieren der Informationsmodellierung des Rückbaus einer kerntechnischen Anlage ferner umfasst:
Importieren erfasster neuer Parameterinformationen des verarbeiteten Objekts und des Rückbauwerkzeugs in die dreidimensionalen Modelle des verarbeiteten Objekts und des Rückbauwerkzeugs, um neue Basisattribute des verarbeiteten Objekts und des Rückbauwerkzeugs zu erhalten;
Erzeugen neuer Verhaltensattribute des Rückbauwerkzeugs gemäß neuen, vom Benutzer konfigurierten Aktionsbeschränkungsinformationen des dreidimensionalen Modells des Rückbauwerkzeugs;
Erhalten neuer technischer Attribute des Rückbauwerkzeugs gemäß neuen, vom Benutzer konfigurierten voreingestellten Interaktionsmodusinformationen des verarbeiteten Objekts und des Rückbauwerkzeugs;
Verknüpfen der neuen Basisattribute des verarbeiteten Objekts und des Rückbauwerkzeugs, der neuen Verhaltensattribute des Rückbauwerkzeugs und der neuen technischen Attribute des Rückbauwerkzeugs, um aktualisierten Inhalt der Informationsmodellierung des Rückbaus einer kerntechnischen Anlage zu erhalten.

4. Verfahren nach Anspruch 1, wobei der voreingestellte Interaktionsmodus mindestens zwei Interaktionsmodi zwischen dem verarbeiteten Objekt und dem Rückbauwerkzeug umfasst, und der Schritt des Simulierens der Aktionssimulationsergebnisse der dreidimensionalen Modelle des verarbeiteten Objekts und des Rückbauwerkzeugs auf der Grundlage des voreingestellten Interaktionsmodus zwischen dem verarbeiteten Objekt und dem Rückbauwerkzeug, um ein Zielsimulationsergebnis des verarbeiteten Objekts und des Rückbauwerkzeugs zu erhalten, umfasst:
Erfassen der mindestens zwei Interaktionsmodi zwischen dem verarbeiteten Objekt und dem Rückbauwerkzeug;
Ändern einer voreingestellten Reihenfolge der Interaktionsmodi zwischen dem verarbeiteten Objekt und dem Rückbauwerkzeug, und Simulieren der Aktionssimulationsergebnisse der dreidimensionalen Modelle des verarbeiteten Objekts und des Rückbauwerkzeugs, um mindestens zwei vorläufige Simulationsergebnisse des verarbeiteten Objekts und des Rückbauwerkzeugs zu erhalten;
Bestimmen des Zielsimulationsergebnisses aus den mindestens zwei vorläufigen Simulationsergebnissen.

5. Verfahren nach Anspruch 4, wobei das Bestimmen des Zielsimulationsergebnisses aus den mindestens zwei vorläufigen Simulationsergebnissen umfasst:
Berechnen einer geschätzten Betriebszeit in den mindestens zwei vorläufigen Simulationsergebnissen des verarbeiteten Objekts und des Rückbauwerkzeugs;
Nehmen des Simulationsergebnisses mit der kürzeren geschätzten Betriebszeit in den mindestens zwei vorläufigen Simulationsergebnissen als das Zielsimulationsergebnis des verarbeiteten Objekts und des Rückbauwerkzeugs.

6. Verfahren nach Anspruch 1, wobei das Zielsimulationsergebnis des verarbeiteten Objekts und des Rückbauwerkzeugs ein Abfallstatistikergebnis, ein Kostenschätzungsergebnis und ein Dosisbewertungsergebnis umfasst, und das Verfahren ferner umfasst:
Eingeben des Abfallstatistikergebnisses, des Kostenschätzungsergebnisses und des Dosisbewertungsergebnisses in ein Auswertungsalgorithmusmodell, um ein quantitatives Auswertungsergebnis eines simulierten Rückbauplans des verarbeiteten Objekts zu erhalten.

7. Vorrichtung zur Verarbeitung eines Rückbaumodells einer kerntechnischen Anlage, umfassend:
ein Erfassungsmodul, das dazu konfiguriert ist, dreidimensionale Modelle eines verarbeiteten Objekts und eines Rückbauwerkzeugs zu erfassen;
ein Extraktionsmodul, das dazu konfiguriert ist, Basisattribute, Verhaltensattribute und technische Attribute des verarbeiteten Objekts und des Rückbauwerkzeugs aus einer vorab erstellten Informationsmodellierung des Rückbaus einer kerntechnischen Anlage zu extrahieren; wobei die Basisattribute des verarbeiteten Objekts physikalische Attribute des verarbeiteten Objekts umfassen, die Basisattribute des Rückbauwerkzeugs physikalische Attribute des Rückbauwerkzeugs umfassen, die Verhaltensattribute des Rückbauwerkzeugs Aktionsbeschränkungen des Rückbauwerkzeugs umfassen, und die technischen Attribute des Rückbauwerkzeugs einen voreingestellten Interaktionsmodus zwischen dem verarbeiteten Objekt und dem Rückbauwerkzeug umfassen;
ein Dosisverarbeitungsmodul, das dazu konfiguriert ist, gemäß einer Quelltermverteilung in den physikalischen Attributen des verarbeiteten Objekts ein dreidimensionales Strahlungsfeld des verarbeiteten Objekts zu berechnen und eine Vernetzung durchzuführen, um Strahlungsfeld-Dosisnetze des verarbeiteten Objekts zu erhalten;
ein Aktionssimulationsmodul, das dazu konfiguriert ist, eine Aktionssimulation an dem Rückbauwerkzeug gemäß den Aktionsbeschränkungen des Rückbauwerkzeugs und den Strahlungsfeld-Dosisnetzen des verarbeiteten Objekts durchzuführen, um Aktionssimulationsergebnisse der dreidimensionalen Modelle des verarbeiteten Objekts und des Rückbauwerkzeugs zu erhalten;
ein Simulationsmodul, das dazu konfiguriert ist, die Aktionssimulationsergebnisse der dreidimensionalen Modelle des verarbeiteten Objekts und des Rückbauwerkzeugs auf der Grundlage des voreingestellten Interaktionsmodus zwischen dem verarbeiteten Objekt und dem Rückbauwerkzeug zu simulieren, um ein Zielsimulationsergebnis des verarbeiteten Objekts und des Rückbauwerkzeugs zu erhalten;
ein Bewertungsmodul, das dazu konfiguriert ist, mindestens zwei verarbeitete Objekte, das Rückbauwerkzeug und das Zielsimulationsergebnis der verarbeiteten Objekte und des Rückbauwerkzeugs zu durchlaufen und einen simulierten Rückbau-Verarbeitungsplan für die verarbeiteten Objekte zu erzeugen.

8. Computervorrichtung, umfassend einen Speicher und einen Prozessor, wobei der Speicher ein Computerprogramm speichert, wobei, wenn der Prozessor das Computerprogramm ausführt, Schritte des Verfahrens nach einem der Ansprüche 1 bis 6 implementiert werden.

9. Computerlesbares Speichermedium, in dem ein Computerprogramm gespeichert ist, wobei, wenn das Computerprogramm von einem Prozessor ausgeführt wird, Schritte des Verfahrens nach einem der Ansprüche 1 bis 6 implementiert werden.

10. Computerprogrammprodukt, umfassend ein Computerprogramm, wobei, wenn das Computerprogramm von einem Prozessor ausgeführt wird, Schritte des Verfahrens nach einem der Ansprüche 1 bis 6 implementiert werden.

## Revendications

1. Procédé de traitement de modèle de déclassement d'installation nucléaire, comprenant les étapes suivantes :
acquérir des modèles tridimensionnels d'un objet traité et d'un outil de déclassement ;
extraire des attributs de base, des attributs de comportement et des attributs d'ingénierie de l'objet traité et de l'outil de déclassement à partir d'une modélisation d'informations de déclassement d'installation nucléaire préétablie ; dans lequel les attributs de base de l'objet traité comprennent des attributs physiques de l'objet traité, les attributs de base de l'outil de déclassement comprennent des attributs physiques de l'outil de déclassement, les attributs de comportement de l'outil de déclassement comprennent des contraintes d'action de l'outil de déclassement, et les attributs d'ingénierie de l'outil de déclassement comprennent un mode interactif prédéfini entre l'objet traité et l'outil de déclassement ;
selon une distribution de terme source dans les attributs physiques de l'objet traité, calculer un champ de rayonnement tridimensionnel de l'objet traité et réaliser un maillage afin d'obtenir des mailles de dose de champ de rayonnement de l'objet traité ;
réaliser une simulation d'action sur l'outil de déclassement selon les contraintes d'action de l'outil de déclassement et les mailles de dose de champ de rayonnement de l'objet traité afin d'obtenir des résultats de simulation d'action des modèles tridimensionnels de l'objet traité et de l'outil de déclassement ;
simuler les résultats de simulation d'action des modèles tridimensionnels de l'objet traité et de l'outil de déclassement sur la base du mode interactif prédéfini entre l'objet traité et l'outil de déclassement afin d'obtenir un résultat de simulation cible de l'objet traité et de l'outil de déclassement ;
parcourir au moins deux objets traités, l'outil de déclassement et le résultat de simulation cible des objets traités et de l'outil de déclassement, et générer un plan de traitement de déclassement simulé pour les objets traités.

2. Procédé selon la revendication 1, dans lequel un procédé pour établir la modélisation d'informations de déclassement d'installation nucléaire comprend les étapes suivantes :
importer des informations de paramètres de l'objet traité et de l'outil de déclassement dans les modèles tridimensionnels de l'objet traité et de l'outil de déclassement afin d'obtenir les attributs de base de l'objet traité et de l'outil de déclassement ; dans lequel les informations de paramètres comprennent des informations de distribution de terme source ;
générer les attributs de comportement de l'outil de déclassement selon des informations de contrainte d'action du modèle tridimensionnel de l'outil de déclassement ;
obtenir les attributs d'ingénierie de l'outil de déclassement selon des informations de mode interactif prédéfini de l'objet traité et de l'outil de déclassement ;
associer les attributs de base de l'objet traité et de l'outil de déclassement, les attributs de comportement de l'outil de déclassement et les attributs d'ingénierie de l'outil de déclassement afin d'obtenir la modélisation d'informations de déclassement d'installation nucléaire.

3. Procédé selon la revendication 2, dans lequel un procédé pour mettre à jour la modélisation d'informations de déclassement d'installation nucléaire comprend en outre les étapes suivantes :
importer de nouvelles informations de paramètres acquises de l'objet traité et de l'outil de déclassement dans les modèles tridimensionnels de l'objet traité et de l'outil de déclassement afin d'obtenir de nouveaux attributs de base de l'objet traité et de l'outil de déclassement ;
générer de nouveaux attributs de comportement de l'outil de déclassement selon de nouvelles informations de contrainte d'action configurées par l'utilisateur du modèle tridimensionnel de l'outil de déclassement ;
obtenir de nouveaux attributs d'ingénierie de l'outil de déclassement selon de nouvelles informations de mode interactif prédéfini configurées par l'utilisateur de l'objet traité et de l'outil de déclassement ;
associer les nouveaux attributs de base de l'objet traité et de l'outil de déclassement, les nouveaux attributs de comportement de l'outil de déclassement et les nouveaux attributs d'ingénierie de l'outil de déclassement afin d'obtenir un contenu mis à jour de la modélisation d'informations de déclassement d'installation nucléaire.

4. Procédé selon la revendication 1, dans lequel le mode interactif prédéfini comprend au moins deux modes interactifs entre l'objet traité et l'outil de déclassement, et l'étape de simulation des résultats de simulation d'action des modèles tridimensionnels de l'objet traité et de l'outil de déclassement sur la base du mode interactif prédéfini entre l'objet traité et l'outil de déclassement afin d'obtenir un résultat de simulation cible de l'objet traité et de l'outil de déclassement comprend ce qui suit :
acquérir les au moins deux modes interactifs entre l'objet traité et l'outil de déclassement ;
modifier un ordre prédéfini des modes d'interaction entre l'objet traité et l'outil de déclassement, et simuler les résultats de simulation d'action des modèles tridimensionnels de l'objet traité et de l'outil de déclassement afin d'obtenir au moins deux résultats de simulation temporaires de l'objet traité et de l'outil de déclassement ;
déterminer le résultat de simulation cible à partir des au moins deux résultats de simulation temporaires.

5. Procédé selon la revendication 4, dans lequel la détermination du résultat de simulation cible à partir des au moins deux résultats de simulation temporaires comprend ce qui suit :
calculer un temps d'exploitation estimé dans les au moins deux résultats de simulation temporaires de l'objet traité et de l'outil de déclassement ;
prendre comme résultat de simulation cible de l'objet traité et de l'outil de déclassement le résultat de simulation présentant le temps d'exploitation estimé le plus court parmi les au moins deux résultats de simulation temporaires.

6. Procédé selon la revendication 1, dans lequel le résultat de simulation cible de l'objet traité et de l'outil de déclassement comprend un résultat statistique des déchets, un résultat d'estimation des coûts et un résultat d'appréciation de dose, et le procédé comprend en outre l'étape suivante :
entrer le résultat statistique des déchets, le résultat d'estimation des coûts et le résultat d'appréciation de dose dans un modèle d'algorithme d'évaluation afin d'obtenir un résultat d'évaluation quantitative d'un plan de déclassement simulé de l'objet traité.

7. Appareil de traitement de modèle de déclassement d'installation nucléaire, comprenant :
un module d'acquisition configuré pour acquérir des modèles tridimensionnels d'un objet traité et d'un outil de déclassement ;
un module d'extraction configuré pour extraire des attributs de base, des attributs de comportement et des attributs d'ingénierie de l'objet traité et de l'outil de déclassement à partir d'une modélisation d'informations de déclassement d'installation nucléaire préétablie ; dans lequel les attributs de base de l'objet traité comprennent des attributs physiques de l'objet traité, les attributs de base de l'outil de déclassement comprennent des attributs physiques de l'outil de déclassement, les attributs de comportement de l'outil de déclassement comprennent des contraintes d'action de l'outil de déclassement, et les attributs d'ingénierie de l'outil de déclassement comprennent un mode interactif prédéfini entre l'objet traité et l'outil de déclassement ;
un module de traitement de dose configuré pour, selon une distribution de terme source dans les attributs physiques de l'objet traité, calculer un champ de rayonnement tridimensionnel de l'objet traité et réaliser un maillage afin d'obtenir des mailles de dose de champ de rayonnement de l'objet traité ;
un module de simulation d'action configuré pour réaliser une simulation d'action sur l'outil de déclassement selon les contraintes d'action de l'outil de déclassement et les mailles de dose de champ de rayonnement de l'objet traité afin d'obtenir des résultats de simulation d'action des modèles tridimensionnels de l'objet traité et de l'outil de déclassement ;
un module de simulation configuré pour simuler les résultats de simulation d'action des modèles tridimensionnels de l'objet traité et de l'outil de déclassement sur la base du mode interactif prédéfini entre l'objet traité et l'outil de déclassement afin d'obtenir un résultat de simulation cible de l'objet traité et de l'outil de déclassement ;
un module d'appréciation configuré pour parcourir au moins deux objets traités, l'outil de déclassement et le résultat de simulation cible des objets traités et de l'outil de déclassement, et générer un plan de traitement de déclassement simulé pour les objets traités.

8. Dispositif informatique comprenant une mémoire et un processeur, la mémoire stockant un programme informatique, dans lequel, lorsque le processeur exécute le programme informatique, les étapes du procédé selon l'une des revendications 1 à 6 sont mises en œuvre.

9. Support de stockage lisible par ordinateur sur lequel est stocké un programme informatique, dans lequel, lorsque le programme informatique est exécuté par un processeur, les étapes du procédé selon l'une des revendications 1 à 6 sont mises en œuvre.

10. Produit de programme informatique comprenant un programme informatique, dans lequel, lorsque le programme informatique est exécuté par un processeur, les étapes du procédé selon l'une des revendications 1 à 6 sont mises en œuvre.
